# EUROPEAN PATENT APPLICATION

(11) **EP 4 756 244 A1**
(43) Date of publication of application: **10.06.2026**
(21) Application number: 23947591.6
(22) Date of filing: 01.08.2023
(51) Int. Cl.: F16C 29/04, F16H 25/24, F16J 15/3232, H02K 7/06

(54) **ELECTRIC ACTUATOR**

(71) Applicant: SMC Corporation, Tokyo 104-0031 (JP)
(72) Inventor: KIKUCHI, Satoshi, Tsukubamirai-shi, Ibaraki 300-2493 (JP)
(74) Representative: Keil & Schaafhausen Patentanwälte PartGmbB
(86) International application number: PCT/JP2023/028142
(87) International publication number: WO 2025/027794

(57) **Abstract**

Provided is an electric actuator (10) having a moving member (18) that moves along a frame member (13) by a driving force of a motor (12). A seal member (45) provided in a slit (38) of a frame (16) of the frame member includes a first seal member (46) attached to a first slit side surface (41), and a second seal member (48) attached to a second slit side surface (43). In a portion where a connection part (66) is not located, the first seal member and the second seal member are attached such that the first seal member supports the second seal member and the second seal member covers a tip part of the first seal member.

## Description

### TECHNICAL FIELD

The present invention relates to an electric actuator.

### BACKGROUND ART

For example, JP 5843580 B2 discloses an electric actuator that moves a movable member by rotating a screw shaft by a driving force of a motor. A frame for accommodating the screw shaft is provided with a slit for preventing interference with a part of the movable member. The slit is provided with a seal member for preventing foreign matter from flowing into the internal space of the frame.

### SUMMARY OF THE INVENTION

A more satisfactory electric actuator has been awaited.

The present invention has the object of solving the aforementioned problems.

An aspect of the present invention is characterized by an electric actuator including a frame member, and a movable member configured to move along the frame member by a driving force of a motor, wherein the frame member includes a guide shaft, and a frame configured to accommodate the guide shaft, wherein the movable member includes an inside part located in an internal space of the frame and configured to move along the guide shaft, an outside part located so as to cover a portion of an outer periphery of the frame, and a connecting portion configured to connect the inside part and the outside part, wherein a slit configured to prevent interference with the connecting portion is formed in the frame, the slit is provided with an elastically deformable seal member configured to prevent a foreign object from entering the internal space, wherein the seal member includes a first seal member formed in a flat plate shape and attached to a first slit side surface, and a second seal member formed in a flat plate and attached to a second slit side surface, and wherein in a portion where the connecting portion is not present, the first seal member and the second seal member are attached in a manner so that the first seal member supports the second seal member and the second seal member covers a distal end portion of the first seal member.

According to the present invention, a more favorable electric actuator can be obtained.

### BRIEF DESCRIPTION OF DRAWINGS

[FIG. 1] FIG. 1 is a perspective view of an electric actuator according to an embodiment of the present invention;
[FIG. 2] FIG. 2 is a vertical cross-sectional view with partial omission of the electric actuator;
[FIG. 3] FIG. 3 is a transverse cross-sectional view taken along line III-III of FIG. 2;
[FIG. 4] FIG. 4 is a transverse cross-sectional view taken along line IV-IV of FIG. 2;
[FIG. 5] FIG. 5 is a perspective view of a movable main body;
[FIG. 6] FIG. 6 is a partially enlarged explanatory diagram of FIG. 4;
[FIG. 7] FIG. 7 is a cross-sectional view taken along line VII-VII of FIG. 6; and
[FIG. 8] FIG. 8 is a cross-sectional explanatory diagram of a seal member according to a modification.

### DETAILED DESCRIPTION OF THE INVENTION

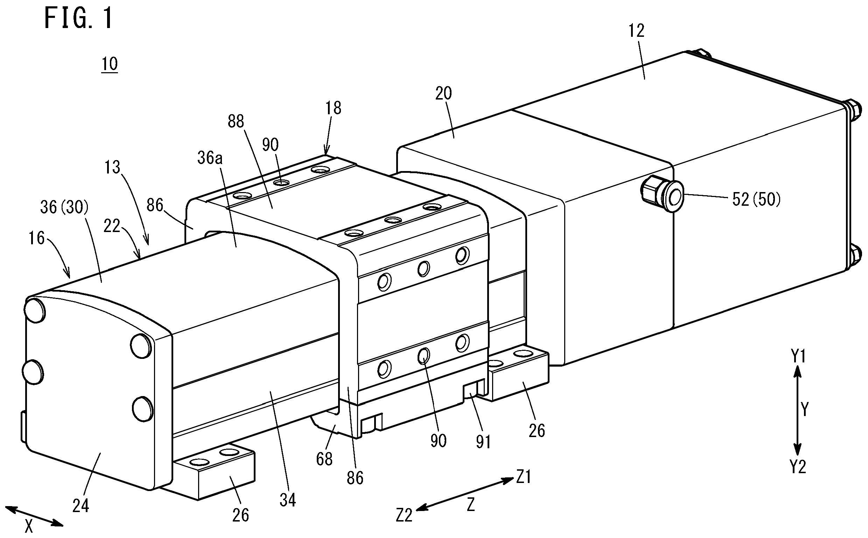

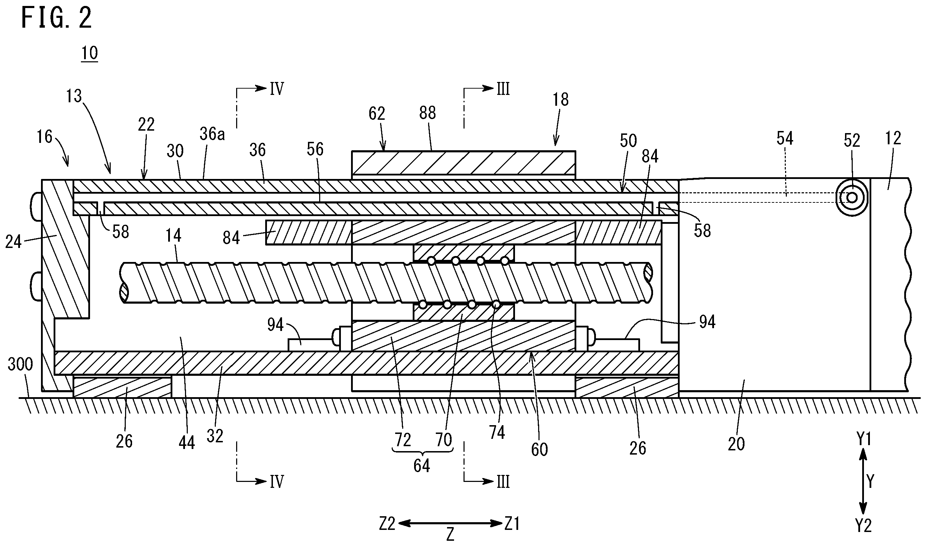

An electric actuator 10 according to an embodiment of the present invention will be described below with reference to the drawings. As shown in FIGS. 1 and 2, the electric actuator 10 according to the present embodiment includes a motor 12, a frame member 13, and a movable member 18. The frame member 13 includes a feed screw shaft (guide shaft) 14 and a frame 16. The feed screw shaft 14 is rotated by a driving force of the motor 12. The feed screw shaft 14 extends in a Z direction. The feed screw shaft 14 is, for example, a ball screw shaft. The feed screw shaft 14 may be a lead screw shaft.

The frame 16 accommodates the feed screw shaft 14. The frame 16 has a connection block 20, a frame main body 22, and an end plate 24. The connection block 20 is connected to the motor 12. A coupling (not shown) that connects a rotating shaft of the motor 12 and one end portion (end portion in a Z1 direction) of the feed screw shaft 14 to each other is provided inside the connection block 20. A bearing (not shown) that rotatably supports the feed screw shaft 14 is provided inside the connection block 20. Another end portion (end portion in a Z2 direction) of the feed screw shaft 14 is rotatably supported by the end plate 24.

As shown in FIGS. 2 to 4, the frame main body 22 is formed in a tubular shape. Specifically, the frame main body 22 is formed in a quadrangular tubular shape. The frame main body 22 extends along an axial direction (Z direction) of the feed screw shaft 14. As shown in FIG. 2, one end portion of the frame main body 22 is fixed to the connection block 20. The opening at one end of the frame main body 22 is covered with the connection block 20. Another end portion of the frame main body 22 is fixed to the end plate 24. The opening at the other end of the frame main body 22 is covered with the end plate 24.

As shown in FIGS. 1 and 2, a pair of leg portions 26 are attached to the frame main body 22. The leg portions 26 allow the electric actuator 10 to be attached to and detached from an installation surface 300. A gap is formed between the frame main body 22 and the installation surface 300 by the pair of leg portions 26.

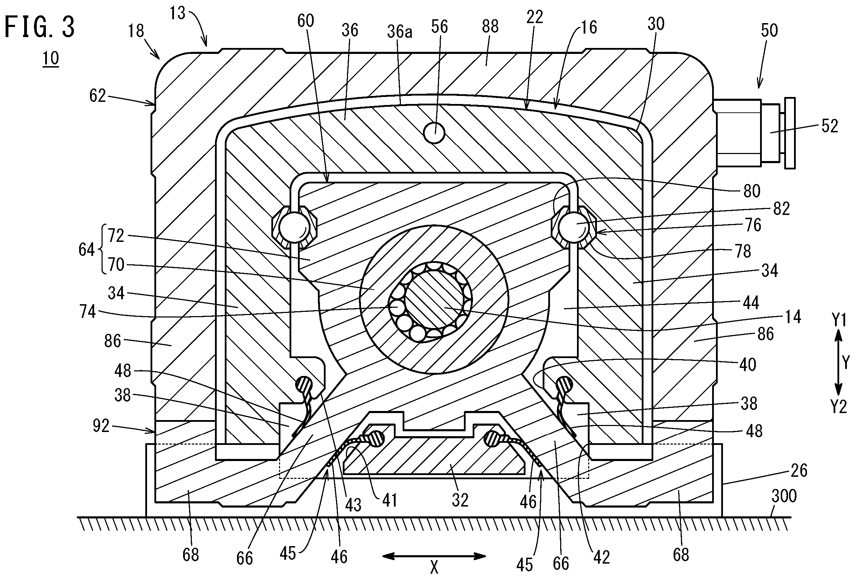

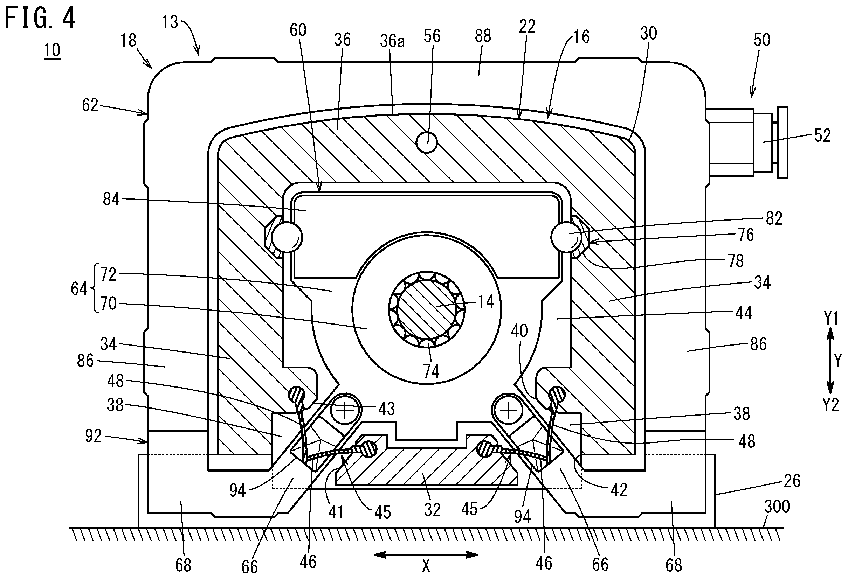

As shown in FIGS. 3 and 4, the frame main body 22 includes a U-shaped base portion 30 and a bottom wall portion 32. The base portion 30 includes a pair of side wall portions 34 and a top portion 36. The pair of side wall portions 34 are disposed so as to sandwich the feed screw shaft 14 in the X direction. The top portion 36 is positioned in a Y1 direction relative to the feed screw shaft 14. An outer surface 36a (surface facing in the Y1 direction) of the top portion 36 has an arc-shaped cross-sectional shape. The bottom wall portion 32 is disposed in a direction (Y2 direction) opposite to the top portion 36 relative to the feed screw shaft 14.

A pair of slits 38 extending over the entire length of the frame main body 22 along the axial direction of the feed screw shaft 14 are formed in the frame main body 22. The slits 38 are provided between the bottom wall portion 32 and the side wall portions 34. Each of the slits 38 includes an inner opening portion 40 that opens to the inner surface of the frame main body 22 and an outer opening portion 42 that opens to the outer surface of the frame main body 22. The pair of slits 38 extend so as to be spaced apart from the inner opening portions 40 toward the outer opening portions 42. Each of the slits 38 extend from the inner opening portion 40 toward the outer opening portion 42 so as to be inclined with respect to the height direction (Y direction) of the frame main body 22.

The frame main body 22 is provided with first slit side surfaces 41 and second slit side surfaces 43 that form the slits 38. The first slit side surfaces 41 and the second slit side surfaces 43 face each other. The first slit side surfaces 41 are provided on the bottom wall portion 32, and the second slit side surfaces 43 are provided on the side wall portions 34.

Each of the slits 38 is provided with a seal member 45 for preventing foreign matter from flowing into an internal space 44 from the external space of the frame 16 through the slits 38. The foreign matter includes dust, water droplets, and the like. The seal member 45 includes a first seal member 46 and a second seal member 48. Each of the first seal member 46 and the second seal member 48 is formed of a rubber material so as to be elastically deformable. The first seal member 46 is mounted to the first slit side surface 41, and the second seal member 48 is mounted to the second slit side surface 43. The detailed configurations of the first seal member 46 and the second seal member 48 will be described later.

As shown in FIG. 2, the frame 16 is provided with an air supply portion 50 for supplying air to the internal space 44 of the frame 16. The air supply portion 50 includes a port portion 52, a first supply flow path 54, a second supply flow path 56, and a plurality of supply holes 58. The port portion 52 is mounted to the connection block 20. The port portion 52 is connected to an air supply source via a tube (not shown).

The first supply flow path 54 is formed in a wall portion of the connection block 20. The first supply flow path 54 extends from the port portion 52 to an end surface of the connection block 20 in the Z2 direction. The second supply flow path 56 is formed inside the top portion 36. The second supply flow path 56 extends over the entire length of the frame main body 22 in the Z direction. The second supply flow path 56 communicates with the first supply flow path 54. The supply holes 58 communicate with the second supply flow path 56 and the internal space 44 of the frame 16. The supply holes 58 are provided, for example, at both end portions of the frame main body 22. The positions, sizes, shapes, and the like of the supply holes 58 can be set as appropriate.

Air supplied from an air supply source (not shown) to the port portion 52 is introduced into the internal space 44 of the frame 16 via the first supply flow path 54, the second supply flow path 56, and the plurality of supply holes 58. The air introduced into the internal space 44 is led out to the external space of the frame 16 from between the first seal members 46 and the second seal members 48. Therefore, the air can prevent foreign matter from flowing into the internal space 44 from between the first seal members 46 and the second seal members 48.

As shown in FIGS. 1 to 3, the movable member 18 moves along the frame member 13 by driving the motor 12. In other words, the movable member 18 moves along the axial direction of the feed screw shaft 14 in accordance with the rotation of the feed screw shaft 14. The movable member 18 includes a movable main body 60 and a table 62. The movable main body 60 includes an inside part 64, a pair of connecting portions 66, and a pair of outer protruding portions 68.

As shown in FIGS. 2 and 3, the inside part 64 includes a nut portion 70 and a tubular portion 72. The nut portion 70 is screw-engaged with the feed screw shaft 14. The nut portion 70 is, for example, a ball nut. A plurality of balls 74 are disposed between the nut portion 70 and the feed screw shaft 14. The nut portion 70 is not limited to a ball nut. The nut portion 70 is fixed to the tubular portion 72 by a fastening member (not shown) in a state of being disposed inside the tubular portion 72.

As shown in FIG. 3, the tubular portion 72 is guided in the axial direction of the feed screw shaft 14 by a pair of guide members 76. The guide members 76 are provided between the tubular portion 72 and the side wall portions 34. The guide members 76 are located closer to the top portion 36 (in the Y1 direction) than the feed screw shaft 14 is.

As shown in FIGS. 2 and 3, each of the guide members 76 includes a first rail 78, a second rail 80, a plurality of balls 82, and a pair of end caps 84. As shown in FIG. 3, the first rail 78 and the second rail 80 are disposed so as to face each other. The first rail 78 is fixed to the side wall portion 34. The first rail 78 extends over the entire length of the frame main body 22. The second rail 80 is fixed to the tubular portion 72. The first rail 78 and the second rail 80 are formed with concave surfaces with which the balls 82 come into contact. The pair of end caps 84 are fixed to both end surfaces of the tubular portion 72 in the Z direction (see FIG. 2). The end caps 84 prevent the balls 82 from coming out from between the first rail 78 and the second rail 80.

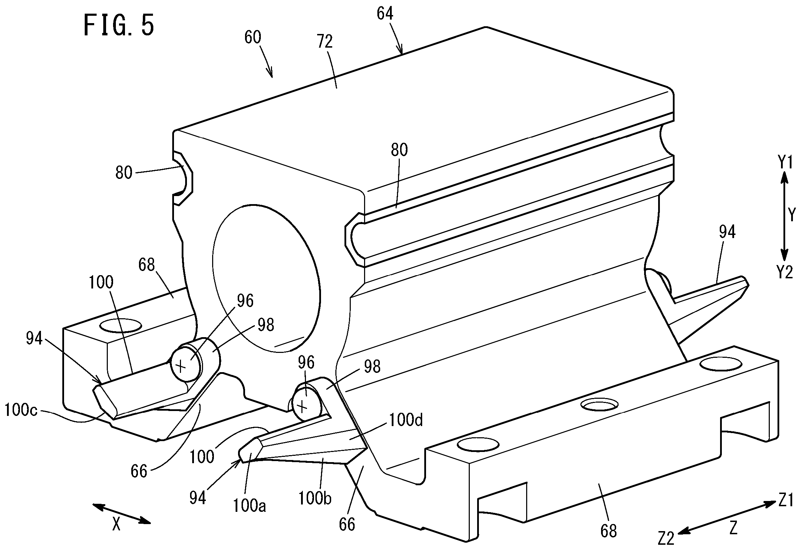

As shown in FIGS. 3 and 5, the pair of connecting portions 66 extend from the tubular portion 72 in the Y2 direction so as to be spaced apart from each other. Each of the connecting portions 66 is inserted through the slit 38 so as to push open the first seal member 46 and the second seal member 48 toward the outer opening portion 42 (see FIG. 3). The slits 38 prevent interference between the frame 16 and the connecting portions 66. The connecting portions 66 connect the tubular portion 72 and the outer protruding portions 68 to each other.

The outer protruding portions 68 are disposed in the external space of the frame 16. The outer protruding portions 68 extend from the extending end portions of the connecting portions 66 in the direction opposite to the bottom wall portion 32 in the X direction. An end portion of each of the outer protruding portions 68 in the extending direction is located in the direction opposite to the bottom wall portion 32 relative to the outer surface of the side wall portion 34 (see FIG. 3).

As shown in FIG. 3, the table 62 is formed in a U-shape. The table 62 covers a part of the base portion 30 from the outside. A gap is formed between the inner surface of the table 62 and the outer surface of the base portion 30. The table 62 includes a pair of table side portions 86 and a table top portion 88.

The table side portions 86 partially covers the outer surfaces of the side wall portions 34 from the outside. A plurality of attachment holes 90 for attaching an object to be moved such as a workpiece (not shown) are formed in the table side portions 86 (see FIG. 1). The end portions of the table side portions 86 in the Y2 direction are fixed to the outer protruding portions 68 by fastening members 91 (see FIG. 1). The table top portion 88 connects the end portions of the pair of table side portions 86 in the Y1 direction to each other. The table top portion 88 partially covers the outer surface 36a of the top portion 36 from the outside. The plurality of attachment holes 90 are formed in the table top portion 88

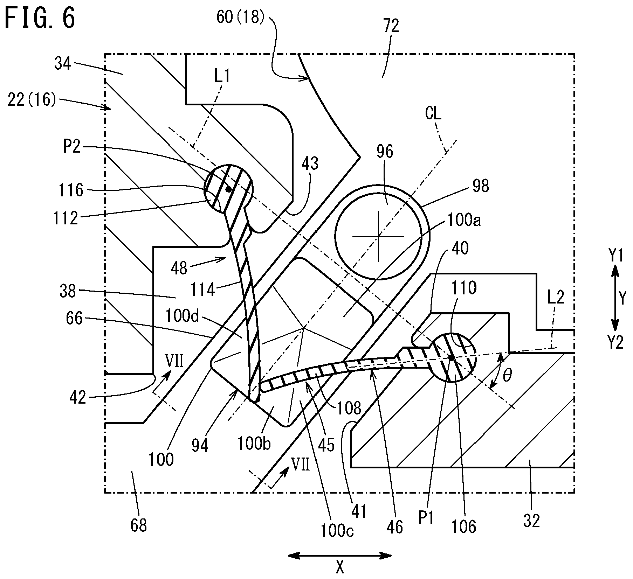

In the present embodiment, the outer protruding portions 68 and the table 62 form an outside part 92 that is positioned to cover a part of the outer periphery of the frame 16. The outside part 92 covers the inside part 64 via the frame 16. The outside part 92 is located in a direction intersecting with the axis of the feed screw shaft 14 (in the present embodiment, a direction perpendicular to the axis) with respect to the inside part 64. The connecting portions 66 connect the inside part 64 and the outside part 92 to each other. As shown in FIGS. 5 and 6, to each end surface of each of the connecting portions 66 in the Z direction, a pushing-aside member 94 for pushing aside the first seal member 46 and the second seal member 48 is fixed by a fastening member 96. That is, the movable member 18 has four of the pushing-aside members 94.

Each of the pushing-aside members 94 includes an attachment base 98 and a projecting portion 100. The attachment base 98 is in contact with an end surface of the connecting portion 66 facing the Z direction. The projecting portion 100 projects from the attachment base 98 in a direction opposite to the connecting portion 66. The projecting portion 100 has a distal end surface 100a, a central bottom surface 100b, a first side bottom surface 100c, and a second side bottom surface 100d. The distal end surface 100a extends in a direction intersecting the projecting direction of the projecting portion 100. The distal end surface 100a is a flat surface having a substantially pentagonal shape.

The central bottom surface 100b is a flat surface having a triangular shape. As shown in FIG. 6, the central bottom surface 100b faces the outer opening portion 42 of the slit 38. The central bottom surface 100b is inclined toward an inner opening portion 40 side of the slit 38 relative to the projecting direction of the projecting portion 100. The first side bottom surface 100c is adjacent to a first slit side surface 41 side relative to the central bottom surface 100b. The second side bottom surface 100d is adjacent to the second slit side surface 43 side relative to the central bottom surface 100b.

As shown in FIGS. 5 and 6, each of the first side bottom surface 100c and the second side bottom surface 100d is formed in a quadrangular shape. Each of the first side bottom surface 100c and the second side bottom surface 100d is twisted toward the projecting direction of the projecting portion 100. The distal end portion of the first side bottom surface 100c and the distal end portion of the second side bottom surface 100d face the outer opening portion 42. The proximal end portion of the first side bottom surface 100c faces the first slit side surface 41. The proximal end portion of the second side bottom surface 100d faces the second slit side surface 43.

As shown in FIG. 6, the first seal member 46 extends over the entire length of the frame main body 22. The first seal member 46 includes a first attachment portion 106 and a first seal main body 108. The first attachment portion 106 has a circular transverse cross section. The first attachment portion 106 is detachably attached to a first mounting groove 110 formed in the first slit side surface 41. The first seal main body 108 is formed in a flat plate shape. The first seal main body 108 extends from the first attachment portion 106 toward the slit 38. A portion of the first seal main body 108 adjacent to the first attachment portion 106 is formed to be thicker than the distal end portion of the first seal main body 108. The first seal main body 108 is in contact with the first side bottom surface 100c of the pushing-aside member 94.

The second seal member 48 extends over the entire length of the frame main body 22. The second seal member 48 includes a second attachment portion 112 and a second seal main body 114. The second attachment portion 112 has a circular transverse cross section. The second attachment portion 112 is detachably attached to a second mounting groove 116 formed in the second slit side surface 43. The second seal main body 114 is formed in a flat plate shape. The second seal main body 114 extends from the second attachment portion 112 toward the slit 38. A portion of the second seal main body 114 adjacent to the second attachment portion 112 is formed to be thicker than the distal end portion of the second seal main body 114. The second seal main body 114 is in contact with the second side bottom surface 100d of the pushing-aside member 94.

In a portion where the movable member 18 is not present, the first seal member 46 and the second seal member 48 are attached such that the first seal main body 108 supports the second seal main body 114 and the distal end portion of the second seal main body 114 covers the distal end portion of the first seal main body 108.

The size of the first seal member 46 and the size of the second seal member 48 are same as each other. A center P2 of the second attachment portion 112 is displaced toward the outer opening portion 42 from an imaginary line (first imaginary line L1) that is perpendicular to a center line CL of the connecting portion 66 and passes through a center P1 of the first attachment portion 106. Accordingly, even when the size of the first seal member 46 and the size of the second seal member 48 are the same as each other, the distal end portion of the first seal main body 108 can be covered with the second seal main body 114.

An angle θ formed by a second imaginary line L2 along the extending direction of the first seal main body 108 extending from the first attachment portion 106 and the first imaginary line L1 is preferably 0 degrees or more and 45 degrees or less, and more preferably about 40 degrees. In this case, the second seal main body 114 is easily supported by the first seal main body 108.

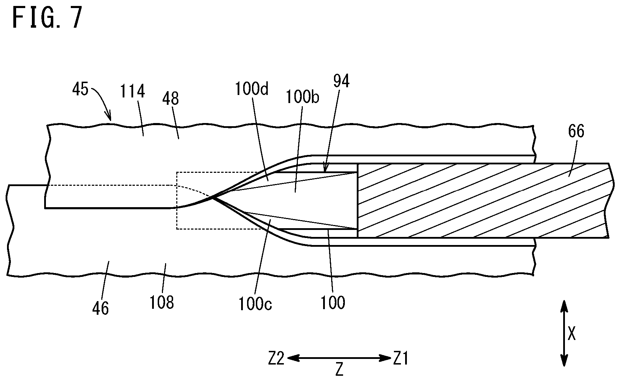

In such an electric actuator 10, when the feed screw shaft 14 is rotated by driving the motor 12, the movable member 18 moves in the Z direction with respect to the feed screw shaft 14. Then, as shown in FIG. 7, the first seal main body 108 is elastically deformed toward the first slit side surface 41 by the first side bottom surface 100c, and the second seal main body 114 is elastically deformed toward the second slit side surface 43 by the second side bottom surface 100d. As a result, the first seal main body 108 and the second seal main body 114 open in the direction away from each other, and thus the movable member 18 can be smoothly moved with respect to the frame 16. When the movable member 18 passes through, the first seal main body 108 and the second seal main body 114 that have been elastically deformed return to their original shapes. Then, the first seal main body 108 and the second seal main body 114 are closed, and thus, it is possible to prevent foreign matter from flowing into the internal space 44 from the external space through the slit 38.

According to the present embodiment, the elastic deformation of the second seal member 48 can be suppressed by the first seal member 46. This makes it possible to favorably suppress the inflow of foreign matter from the external space of the frame 16 into the internal space 44 through the slit 38. Therefore, a more favorable electric actuator 10 can be obtained.

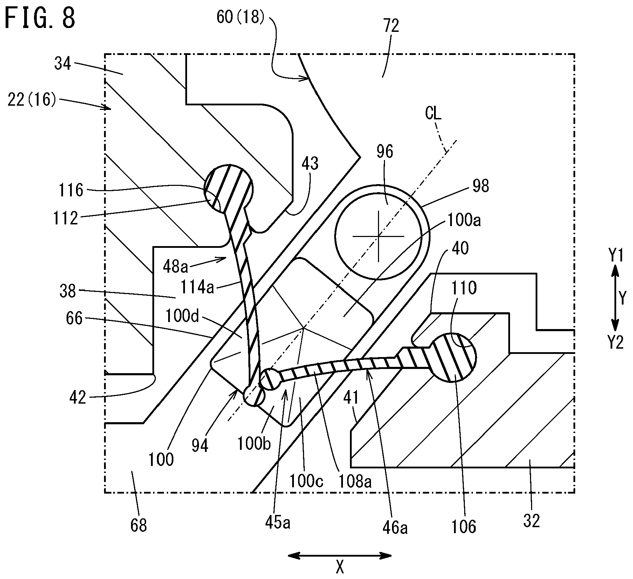

As shown in FIG. 8, the electric actuator 10 according to the present embodiment may include a seal member 45a instead of the seal member 45 described above. The seal member 45a includes a first seal member 46a and a second seal member 48a. The distal end portion of a first seal main body 108a of the first seal member 46a has a circular transverse cross section. The distal end portion of a second seal main body 114a of the second seal member 48a has a circular transverse cross section. In this case, the contact area between the first seal member 46a and the second seal member 48a can be reduced, and thus the sliding resistance (frictional resistance) of the movable member 18 can be reduced.

The present embodiment is not limited to the configuration described above. For example, the movable member may be moved along the frame member by a linear motor. In this case, the guide shaft may not be provided with the feed screw.

With reference to the above disclosure, the following supplementary notes are disclosed.

### (Supplementary Note 1)

The electric actuator (10) includes the frame member (13), and the movable member (18) configured to move along the frame member by the driving force of the motor (12), wherein the frame member includes the guide shaft (14), and the frame (16) configured to accommodate the guide shaft, wherein the movable member includes the inside part (64) located in the internal space (44) of the frame and configured to move along the guide shaft, the outside part (92) located so as to cover the portion of the outer periphery of the frame, and the connecting portion (66) configured to connect the inside part and the outside part, wherein the slit (38) configured to prevent interference with the connecting portion is formed in the frame, the slit is provided with the elastically deformable seal member (45, 45a) configured to prevent the foreign object from entering the internal space, wherein the seal member includes the first seal member (46, 46a) formed in the flat plate shape and attached to the first slit side surface (41), and the second seal member (48, 48a) formed in the flat plate and attached to the second slit side surface (43), and wherein in the portion where the connecting portion is not present, the first seal member and the second seal member are attached in the manner so that the first seal member supports the second seal member and the second seal member covers the distal end portion of the first seal member.

In accordance with such a configuration, the elastic deformation of the second seal member can be suppressed by the first seal member. This makes it possible to favorably suppress the inflow of foreign matter from the external space of the frame into the internal space through the slit. Therefore, a more favorable electric actuator can be obtained.

### (Supplementary Note 2)

In the electric actuator according to Supplementary Note 1, the first seal member includes the first attachment portion (106) configured to be attached to the first slit side surface, the second seal member may include a second attachment portion (112) configured to be attached to the second slit side surface, the center (P2) of the second attachment portion may be displaced toward the outer opening portion (42) of the slit from the imaginary line (L1) that is perpendicular to the center line (CL) of the connecting portion and passes through the center (P1) of the first attachment portion.

In accordance with such a configuration, the distal end portion of the second seal member easily covers the distal end portion of the first seal member.

### (Supplementary Note 3)

In the electric actuator according to Supplementary Note 2, the first attachment portion may be attachable to and detachable from the first mounting groove (110) formed in the first slit side surface, the second attachment portion may be attachable to and detachable from the second mounting groove (116) formed in the second slit side surface, and each of the first attachment portion and the second attachment portion may have the circular transverse cross section.

In accordance with such a configuration, for example, even when the first seal member and the second seal member are worn (abraded) due to contact with the connecting portion, the first seal member and the second seal member can be easily replaced.

### (Supplementary Note 4)

In the electric actuator according to Supplementary Note 3, the size of the first seal member and the size of the second seal member may be same as each other.

In accordance with such a configuration, it is only necessary to prepare components of a single size as the replacement components of the first seal member and the second seal member.

### (Supplementary Note 5)

In the electric actuator according to any one of Supplementary Notes 1 to 4, the frame includes the U-shaped base portion (30) including the pair of side wall portions (34) and the top portion (36), and the bottom wall portion (32) located on the side opposite to the top portion relative to the guide shaft, and the slit may be provided between the bottom wall portion and each of the pair of side wall portions, the bottom wall portion may have two of the first slit side surfaces, and each of the pair of side wall portions may have the second slit side surface.

In accordance with such a configuration, since the second seal member is attached to the side wall portion, it is possible to further prevent the foreign matter from flowing into the internal space through the slit.

### (Supplementary Note 6)

In the electric actuator according to Supplementary Note 5, wherein the pair of the slits may extend from the inner opening portions (40) toward the outer opening portions of the slits so as to be spaced apart from each other.

### (Supplementary Note 7)

In the electric actuator according to Supplementary Note 5 or 6, the transverse cross-sectional shape of the outer surface (36a) of the top portion may be an arc shape.

In accordance with such a configuration, the foreign matter sticking to the outer surface of the top portion can be slid off.

### (Supplementary Note 8)

In the electric actuator according to any one of Supplementary Notes 1 to 7, the distal end portion of the first seal member may be in contact with the second seal member and has a circular transverse cross section.

In accordance with such a configuration, the contact area between the second seal member and the distal end portion of the first seal member can be made relatively small. Thus, the sliding resistance (frictional resistance) of the movable member relative to the first seal member and the second seal member can be reduced.

### (Supplementary Note 9)

In the electric actuator according to any one of Supplementary Notes 1 to 8, wherein the air supply flow path (54, 56) through which air is introduced into the internal space may be formed in the wall portion of the frame.

In accordance with such a configuration, the air can suppress the inflow of foreign matter into the internal space of the frame.

### (Supplementary Note 10)

In the electric actuator according to Supplementary Note 2, the imaginary line may be the first imaginary line, and the first seal member may be attached in the manner so that the angle (θ) formed by the second imaginary line (L2) along the protruding direction of the first seal member from the first attachment portion and the first imaginary line may be 0 degrees or more and 45 degrees or less.

In accordance with such a configuration, the first seal member easily supports the second seal member.

It should be noted that the present invention is not limited to the disclosure described above, and various configurations could be adopted therein without departing from the essence and gist of the present invention.

### REFERENCE SIGNS LIST

10: electric actuator
12: motor
13: frame member
14: feed screw shaft (guide shaft)
16: frame
18: movable member
30: base portion
32: bottom wall portion
34: side wall portion
36: top portion
36a: outer surface of top portion
38: slit
40: inner opening portion
41: first slit side surface
42: outer opening portion
43: second slit side surface
44: internal space
45, 45a: seal member
46, 46a: first seal member
48, 48a: second seal member
54: first supply flow path
56: second supply flow path
64: inside part
66: connecting portion
92: outside part
106: first attachment portion
110: first mounting groove
112: second attachment portion
116: second mounting groove
CL: center line
L1: first imaginary line
L2: second imaginary line
P1, P2: center

## Claims

1. An electric actuator (10) comprising a frame member (13), and a movable member (18) configured to move along the frame member by a driving force of a motor (12),
wherein the frame member includes:
a guide shaft (14); and
a frame (16) configured to accommodate the guide shaft,
wherein the movable member includes:
an inside part (64) located in an internal space (44) of the frame and configured to move along the guide shaft;
an outside part (92) located so as to cover a portion of an outer periphery of the frame; and
a connecting portion (66) configured to connect the inside part and the outside part,
wherein a slit (38) configured to prevent interference with the connecting portion is formed in the frame,
the slit is provided with an elastically deformable seal member (45, 45a) configured to prevent a foreign object from entering the internal space,
wherein the seal member includes:
a first seal member (46, 46a) formed in a flat plate shape and attached to a first slit side surface (41); and
a second seal member (48, 48a) formed in a flat plate and attached to a second slit side surface (43), and
wherein in a portion where the connecting portion is not present, the first seal member and the second seal member are attached in a manner so that the first seal member supports the second seal member and the second seal member covers a distal end portion of the first seal member.

2. The electric actuator according to claim 1, wherein the first seal member includes a first attachment portion (106) configured to be attached to the first slit side surface,
the second seal member includes a second attachment portion (112) configured to be attached to the second slit side surface, and
a center (P2) of the second attachment portion is displaced toward an outer opening portion (42) of the slit from an imaginary line (L1) that is perpendicular to a center line (CL) of the connecting portion and passes through a center (P1) of the first attachment portion.

3. The electric actuator according to claim 2, wherein the first attachment portion is attachable to and detachable from a first mounting groove (110) formed in the first slit side surface,
the second attachment portion is attachable to and detachable from a second mounting groove (116) formed in the second slit side surface, and
each of the first attachment portion and the second attachment portion has a circular transverse cross section.

4. The electric actuator according to claim 3,
wherein a size of the first seal member and a size of the second seal member are same as each other.

5. The electric actuator according to claim 1,
wherein the frame includes:
a U-shaped base portion (30) including a pair of side wall portions (34) and a top portion (36); and
a bottom wall portion (32) located on a side opposite to the top portion relative to the guide shaft, and
wherein the slit is provided between the bottom wall portion and each of the pair of side wall portions,
the bottom wall portion has two of the first slit side surfaces, and
each of the pair of side wall portions has the second slit side surface.

6. The electric actuator according to claim 5,
wherein a pair of the slits extend from inner opening portions (40) toward outer opening portions of the slits so as to be spaced apart from each other.

7. The electric actuator according to claim 5,
wherein a transverse cross-sectional shape of an outer surface (36a) of the top portion is an arc shape.

8. The electric actuator according to claim 1,
wherein the distal end portion of the first seal member is in contact with the second seal member and has a circular transverse cross section.

9. The electric actuator according to any one of claims 1 to 8, wherein an air supply flow path (54, 56) through which air is introduced into the internal space is formed in a wall portion of the frame.

10. The electric actuator according to claim 2,
wherein the imaginary line is a first imaginary line, and
the first seal member is attached in a manner so that an angle (θ) formed by a second imaginary line (L2) along a protruding direction of the first seal member from the first attachment portion and the first imaginary line is 0 degrees or more and 45 degrees or less.
